# EUROPÄISCHE PATENTANMELDUNG

(11) **EP 3 637 311 A1**
(43) Veröffentlichungstag der Anmeldung: **15.04.2020**
(21) Anmeldenummer: 19196882.5
(22) Anmeldetag: 12.09.2019
(51) Int. Cl.: G06K 9/00

(54) **VORRICHTUNG UND VERFAHREN ZUM ERMITTELN VON HÖHENINFORMATIONEN EINES OBJEKTS IN EINER UMGEBUNG EINES FAHRZEUGS**

(30) Priorität: 10.10.2018 DE 102018217268
(71) Anmelder: ZF Friedrichshafen AG, 88046 Friedrichshafen (DE)
(72) Erfinder: Metzner, Jannik, 88046 Friedrichshafen (DE); Fafula, Daniel, 88046 Friedrichshafen (DE); Maile, Florian, 88048 Friedrichshafen (DE)
(74) Vertreter: ZF Friedrichshafen AG

(57) **Zusammenfassung**

Die vorliegende Erfindung betrifft eine Vorrichtung (12) zum Ermitteln von Höheninformationen eines Objekts (14) in einer Umgebung eines Fahrzeugs (16), mit: einer Eingangsschnittstelle (20) zum Empfangen von Umgebungssensordaten eines Umgebungssensors (18) mit Informationen über Objekte in der Umgebung des Fahrzeugs sowie von Fahrzeugsensordaten eines Fahrzeugsensors (30, 32) mit Informationen über eine Bewegung des Fahrzeugs in Bezug zu der Umgebung; einer Rastereinheit (22) zum Erzeugen einer dreidimensionalen Rasterdarstellung (27) der Umgebung des Fahrzeugs basierend auf den Umgebungssensordaten und den Fahrzeugsensordaten; einer Auswerteeinheit (24) zum Detektieren einer Bezugsfläche (19) in der dreidimensionalen Rasterdarstellung; und einer Zuordnungseinheit (26) zum Berechnen einer zweidimensionalen Höhenrasterdarstellung der Umgebung des Fahrzeugs basierend auf der dreidimensionalen Rasterdarstellung und der Bezugsfläche, wobei eine Rasterzelle der zweidimensionalen Höhenrasterdarstellung eine Höheninformation des Objekts bezüglich der Bezugsfläche umfasst. Die vorliegende Erfindung betrifft weiterhin ein entsprechendes Verfahren sowie ein System (10).

## Beschreibung

Die vorliegende Erfindung betrifft eine Vorrichtung zum Ermitteln von Höheninformationen eines Objekts in einer Umgebung eines Fahrzeugs sowie ein entsprechendes Verfahren. Weiterhin betrifft die Erfindung ein System zum Ermitteln von Höheninformationen eines Objekts.

Moderne Fahrzeuge (Autos, Transporter, Lastwagen, Motorräder etc.) umfassen eine Vielzahl von Fahrerassistenzsystemen, die dem Fahrer Informationen zur Verfügung stellen und einzelne Funktionen des Fahrzeugs teil- oder vollautomatisiert steuern. Sensoren erfassen die Umgebung des Fahrzeugs sowie andere Verkehrsteilnehmer. Basierend auf den erfassten Daten kann ein Modell der Fahrzeugumgebung erzeugt werden. Durch die fortschreitende Entwicklung im Bereich der autonom und teilautonom fahrenden Fahrzeuge werden der Einfluss und der Wirkungsbereich von Fahrerassistenzsystemen immer größer. Durch die Entwicklung immer präziserer Sensoren ist es möglich, die Umgebung und den Verkehr zu erfassen und einzelne Funktionen des Fahrzeugs vollständig oder teilweise ohne Eingriff des Fahrers zu kontrollieren. Fahrerassistenzsysteme können dabei insbesondere zur Erhöhung der Sicherheit im Verkehr sowie zur Verbesserung des Fahrkomforts beitragen.

Eine wichtige Voraussetzung ist hierbei die Erfassung und Erkennung der Umgebung des eigenen Fahrzeugs. Mittels Umgebungssensoren, wie beispielsweise Radar-, Lidar-, Ultraschall- und Kamerasensoren, werden Sensordaten mit Informationen zu der Umgebung erfasst. Basierend auf den erfassten Daten sowie gegebenenfalls unter zusätzlicher Berücksichtigung im Fahrzeug verfügbarer Daten können dann Objekte in der Umgebung des Fahrzeugs identifiziert und klassifiziert werden. Basierend auf den erkannten Objekten kann beispielsweise ein Verhalten eines autonomen oder teilautonomen Fahrzeugs an eine aktuelle Situation angepasst werden.

Eine Herausforderung bei der Umgebungserfassung ist die Schätzung der Erdoberfläche bzw. der Oberfläche der Straße (Road Plane) im Sichtbereich des Umgebungssensors. Sensoren am Fahrzeug stellen Daten in einem relativen bzw. fahrzeugfesten Koordinatensystem (EGO-Koordinatensystem) dar, das sich auf das eigene Fahrzeug bezieht. In einem solchen Koordinatensystem ist es nicht möglich, Objekthöhen in Bezug zur Erdoberfläche bzw. zur Fahrbahn zu bestimmen, um eine Entscheidung bzgl. einer Über- oder Unterfahrbarkeit eines Objekts zu treffen. Eine Darstellung und Verarbeitung der Umgebung in einem globalen bzw. ortsfesten Koordinatensystem (Weltkoordinatensystem) erfordert eine Transformation, die oft aufwändig zu berechnen ist. Die Entscheidung über eine Unter- oder Überfahrbarkeit eines Objektes ist aber in vielen Fahrsituationen relevant und muss mehr oder weniger in Echtzeit erfolgen.

Ausgehend hiervon stellt sich der vorliegenden Erfindung das Problem, einen Ansatz zum Ermitteln von Höheninformationen zu statischen und dynamischen Objekten in einer Umgebung eines Fahrzeugs bereitzustellen. Insbesondere soll eine zuverlässige und effizient berechenbare Ermittlung von Objekthöhen und freien Höhen, also Höhen freier Bereiche unterhalb von Hindernissen (wie beispielsweise Brücken etc.), ermöglicht werden.

Zum Lösen dieser Aufgabe betrifft die vorliegende Erfindung eine Vorrichtung zum Ermitteln von Höheninformationen eines Objekts in einer Umgebung eines Fahrzeugs, mit:
einer Eingangsschnittstelle zum Empfangen von Umgebungssensordaten eines Umgebungssensors mit Informationen über Objekte in der Umgebung des Fahrzeugs sowie von Fahrzeugsensordaten eines Fahrzeugsensors mit Informationen über eine Bewegung des Fahrzeugs in Bezug zu der Umgebung;
einer Rastereinheit zum Erzeugen einer dreidimensionalen Rasterdarstellung der Umgebung des Fahrzeugs basierend auf den Umgebungssensordaten und den Fahrzeugsensordaten;
einer Auswerteeinheit zum Detektieren einer Bezugsfläche in der dreidimensionalen Rasterdarstellung; und
einer Zuordnungseinheit zum Berechnen einer zweidimensionalen Höhenrasterdarstellung der Umgebung des Fahrzeugs basierend auf der dreidimensionalen Rasterdarstellung und der Bezugsfläche, wobei eine Rasterzelle der zweidimensionalen Höhenrasterdarstellung eine Höheninformation des Objekts bezüglich der Bezugsfläche umfasst.

Weiterhin betrifft ein Aspekt der Erfindung ein System zum Ermitteln von Höheninformationen eines Objekts im Umfeld eines Fahrzeugs, mit:
einer Vorrichtung wie zuvor beschrieben;
einem Umgebungssensor zum Detektieren von Objekten in einer Umgebung des Fahrzeugs; und
einem Fahrzeugsensor zum Detektieren einer Bewegung des Fahrzeugs in Bezug zu seiner Umgebung.

Weitere Aspekte der Erfindung betreffen ein entsprechend der Vorrichtung ausgebildetes Verfahren und ein Computerprogrammprodukt mit Programmcode zum Durchführen der Schritte des Verfahrens, wenn der Programmcode auf einem Computer ausgeführt wird, sowie ein Speichermedium, auf dem ein Computerprogramm gespeichert ist, das, wenn es auf einem Computer ausgeführt wird, eine Ausführung des hierin beschriebenen Verfahrens bewirkt.

Bevorzugte Ausgestaltungen der Erfindung werden in abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere können das System und das Verfahren bzw. das Computerprogrammprodukt entsprechend der für die Vorrichtung in den abhängigen Ansprüchen beschriebenen Ausgestaltungen ausgeführt sein.

Erfindungsgemäß ist es vorgesehen, dass Sensordaten eines Umgebungssensors sowie Sensordaten eines Fahrzeugsensors verarbeitet werden. Zunächst werden die Sensordaten des Umgebungssensors einer dreidimensionalen Rasterdarstellung zugeordnet. Bei der Erzeugung der dreidimensionalen Rasterdarstellung werden die Fahrzeugsensordaten berücksichtigt, so dass es möglich ist, Daten des Umgebungssensors über einen längeren Zeitraum zu verwenden und korrekt zuzuordnen, auch wenn sich das Fahrzeug während des Sammelns der Daten weiterbewegt hat. Basierend auf der erzeugten dreidimensionalen Rasterdarstellung wird eine Bezugsfläche bestimmt. Die Bezugsfläche stellt dabei eine Erdoberfläche, insbesondere eine Straßenoberfläche dar (Road Plane Schätzung). Ausgehend von der ermittelten Bezugsfläche wird unter erneuter Berücksichtigung der dreidimensionalen Rasterdarstellung eine Höhenrasterdarstellung erstellt, in der Höheninformationen von Objekten in der Umgebung des Fahrzeugs in Bezug auf die Bezugsfläche vermerkt sind. Eine Höheninformation kann insbesondere eine Objekthöhe und/oder eine freie Höhe umfassen. Eine Objekthöhe entspricht einer Höhe über der Erd- bzw. Straßenoberfläche. Unter einer freien Höhe wird eine Höhe eines freien Bereichs, also eine unterfahrbare Höhe, beispielsweise einer Brücke, verstanden.

Es werden also Daten des Umgebungssensors, die in einem Koordinatensystem des Fahrzeugs (EGO-Koordinatensystem) vorliegen, verwendet, um Höheninformationen in einem absoluten Koordinatensystem (Weltkoordinatensystem) zu ermitteln. Diese Höheninformationen können dabei eine Grundlage für die Steuerung von teilautonomen oder autonomen Fahrzeugen darstellen. Insbesondere kann erkannt werden, ob es sich bei einem Objekt in der Umgebung des Fahrzeugs um ein über- oder unterfahrbares Objekt handelt. Beispielsweise wird es möglich zu bestimmen, ob ein Verlauf einer Straße bzw. einer Straßenoberfläche bedingt, dass ein wahrgenommenes Hindernis überfahren werden kann.

Im Vergleich zu bisherigen Ansätzen stellt die vorliegende Erfindung einen alternativen Ansatz zur Ermittlung einer Bezugsfläche und zur Ableitung von Höheninformationen von Objekten in einem Umfeld eines Fahrzeugs dar. Teile des statischen Umfelds eines Fahrzeugs können zuverlässig und präzise erkannt werden. Durch die Ermittlung eines zweidimensionalen Höhenrasters wird eine effiziente Berechenbarkeit sichergestellt. Die aufwändig zu berechnende dreidimensionale Rasterdarstellung kann mit einer geringeren Frequenz aktualisiert werden. Die effizient berechenbare zweidimensionale Höhenrasterdarstellung kann mit höherer Frequenz aktualisiert werden. Hierdurch kann eine akkurate Schätzung von Höheninformationen von Objekten in der Umgebung des Fahrzeugs näherungsweise in Echtzeit erfolgen.

In einer bevorzugten Ausgestaltung ist die Auswerteeinheit zum Detektieren einer Straßenebene als Bezugsfläche ausgebildet. Insbesondere ist es möglich, dass durch eine Ebene ein Verlauf einer Straßenebene angenähert wird. Eine Ebene kann effizient modelliert werden. Die Verwendung einer Ebene führt zu ausreichend genauen Vorhersageergebnissen im Nahbereich. Durch eine vereinfachte Modellierung als Ebene kann eine hohe Aktualisierungsrate erreicht werden.

In einer weiteren vorteilhaften Ausgestaltung ist die Zuordnungseinheit zum Berechnen der zweidimensionalen Höhenrasterdarstellung mit zwei Ebenen ausgebildet. Eine Rasterzelle einer ersten Ebene umfasst eine freie Höhe bezüglich der Bezugsfläche. Eine Rasterzelle einer zweiten Ebene umfasst eine Objekthöhe bezüglich der Bezugsfläche. Die Höhenrasterdarstellung umfasst zwei Informationen für jede Rasterzelle. Einerseits wird eine Höhe eines Objekts über der Bezugsfläche angegeben (Objekthöhe), andererseits wird eine freie Höhe angegeben, insbesondere wenn sich kein Objekt auf der Bezugsfläche befindet. Eine verbesserte Kenntnis von Objekten im Umfeld des Fahrzeugs wird erreicht.

In einer weiteren vorteilhaften Ausgestaltung ist die Rastereinheit zum Schätzen einer Bewegung des Fahrzeugs basierend auf den Fahrzeugsensordaten und den Umgebungssensordaten ausgebildet. Weiterhin ist die Rastereinheit zum Zuordnen der Umgebungssensordaten zu Rasterzellen der dreidimensionalen Rasterdarstellung basierend auf einer Kompensation der geschätzten Bewegung ausgebildet. Das Fahrzeug bewegt sich. Die Bewegung des Fahrzeugs kann mittels des Fahrzeugsensors erfasst werden. Um Umgebungssensordaten, die vom Umgebungssensor am Fahrzeug erfasst werden, während sich das Fahrzeug bewegt, in Zusammenschau verwenden zu können, wird bei der Zuordnung der Detektionen zu der dreidimensionalen Rasterdarstellung die Bewegung des Fahrzeugs kompensiert. Hierdurch kann eine dreidimensionale Rasterdarstellung mit höherem Informationsgehalt erzeugt werden. Daten über einen längeren Zeitabschnitt werden analysiert. Die Genauigkeit bei der Ermittlung der Höheninformationen wird verbessert.

In einer weiteren vorteilhaften Ausgestaltung ist die Eingangsschnittstelle zum Empfangen von Radardaten eines Radarsensors und/oder von Lidardaten eines Lidarsensors ausgebildet. Zudem ist die Rastereinheit zum Erzeugen der dreidimensionalen Rasterdarstellung basierend auf den Radardaten und/oder den Lidardaten ausgebildet. Für die Erzeugung der dreidimensionalen Rasterdarstellung ist es vorteilhaft, wenn Radar- und/oder Lidardaten verwendet werden. Durch die Verwendung derartiger Daten kann ein dreidimensionales Raster einer Umgebung des Fahrzeugs präzise erzeugt werden. Es ist möglich, ausreichend genaue Informationen über einen Bereich bis zu einem Abstand von mehreren hHundert Metern zu erfassen. Es versteht sich, dass auch eine Kombination beider oder weiterer Datenquellen möglich ist. Eine genaue Abbildung der Umgebung wird erreicht. Hierdurch kann eine präzise Abschätzung der Höhe von Objekten in der Umgebung des Fahrzeugs erfolgen.

In einer weiteren vorteilhaften Ausgestaltung ist eine Berechnungsfrequenz der Auswerteeinheit und/oder der Zuordnungseinheit größer als eine Berechnungsfrequenz der Rastereinheit. Eine Berechnungsfrequenz entspricht insoweit einer Aktualisierungsrate. Der Aufwand für die Berechnung der dreidimensionalen Rasterdarstellung ist wesentlich höher als der Aufwand für die Berechnung der zweidimensionalen Höhenrasterdarstellung und/oder für die Detektion der Bezugsfläche. Durch die Verwendung einer höheren Berechnungsfrequenz kann eine höhere Genauigkeit bei der Schätzung der Höheninformation insbesondere im näheren Umfeld des Fahrzeugs erreicht werden. Es wird vermieden, dass jedes einzelne Mal eine komplette Neuberechnung der dreidimensionalen Rasterdarstellung erfolgen muss. Es werden Ressourcen gespart und die Aktualisierungsfrequenz erhöht.

In einer weiteren vorteilhaften Ausgestaltung ist die Rastereinheit zum Schätzen einer Trajektorie eines dynamischen Objekts in der dreidimensionalen Rasterdarstellung ausgebildet. Weiterhin ist die Auswerteeinheit zum Detektieren der Bezugsfläche basierend auf der geschätzten Trajektorie ausgebildet. Ein dynamisches Objekt, wie beispielsweise ein anderes Fahrzeug oder auch ein Fußgänger, bewegt sich üblicherweise auf der Bezugsfläche. Durch die Betrachtung und Verfolgung eines dynamischen Objektes können somit weitere Informationen über den Verlauf der Bezugsfläche gewonnen werden. Es wird eine Trajektorie, also eine Bewegung des dynamischen Objektes, geschätzt bzw. verfolgt. Diese geschätzte Trajektorie wird bei der Detektion der Bezugsfläche verwendet. Hierdurch kann die Genauigkeit bei der Berechnung verbessert und die Berechnungsgeschwindigkeit erhöht werden.

In einer weiteren vorteilhaften Ausgestaltung ist die Auswerteeinheit zum Detektieren der Bezugsfläche basierend auf den Umgebungssensordaten ausgebildet. Es ist möglich, dass zusätzlich zur Berücksichtigung der dreidimensionalen Rasterdarstellung auch aktuelle Umgebungssensordaten in die Berechnung der Bezugsfläche mit einfließen. Hierdurch kann erneut die Aktualisierungsfrequenz der Detektion der Bezugsfläche erhöht werden. Die Genauigkeit bei der Berechnung der Höheninformationen von Objekten wird verbessert.

In einer weiteren vorteilhaften Ausgestaltung ist die Eingangsschnittstelle zum Empfangen einer Karteninformation der Umgebung ausgebildet. Weiterhin ist die Auswerteeinheit zum Detektieren der Bezugsfläche basierend auf der Karteninformation ausgebildet. Es ist möglich, zusätzlich eine Karteninformation der Umgebung, also ein vordefiniertes Modell der Umgebung, zu berücksichtigen. Hierdurch kann die Genauigkeit bei der Detektion der Bezugsfläche weiter gesteigert werden. Beispielsweise kann eine Karteninformation über eine Kommunikationsschnittstelle von einem entsprechenden Cloudsystem empfangen werden. Durch die zusätzliche Berücksichtigung der weiteren vordefinierten Karteninformationen kann die Genauigkeit bei der Höhenberechnung weiter verbessert werden.

In einer weiteren Ausgestaltung ist die Eingangsschnittstelle zum Empfangen eines zweidimensionalen Referenzrasters, das basierend auf Umgebungssensordaten anderer Fahrzeuge erzeugt wurde, ausgebildet. Zudem ist die Auswerteeinheit zum Detektieren der Bezugsfläche basierend auf dem Referenzraster ausgebildet. Es werden zusätzlich Daten, die von anderen Fahrzeugen ermittelt wurden, berücksichtigt. Ein zweidimensionales Referenzraster entspricht einer für ein anderes Fahrzeug und basierend auf anderen Umgebungssensordaten berechneten zweidimensionalen Höhenrasterdarstellung. Hierdurch kann die Genauigkeit bei der Berechnung der Höheninformation weiter verbessert werden. Insbesondere ist es vorteilhaft, wenn die Umgebungssensordaten der anderen Fahrzeuge ebenfalls in einem absoluten Koordinatensystem vorliegen. Allerdings kann auch eine entsprechende Transformation durchgeführt werden.

Weiterhin vorteilhafterweise ist die Auswerteeinheit zur Berechnung einer eigenen Position innerhalb der dreidimensionalen Rasterdarstellung ausgebildet. Zudem ist die Auswerteeinheit zum Detektieren der Bezugsfläche basierend auf der eigenen Position ausgebildet. Es kann zusätzlich ausgenutzt werden, dass die eigene Position üblicherweise einer Position auf der Bezugsfläche, also auf der Straße, entspricht. Durch die zusätzliche Berücksichtigung dieses Modellwissens kann die Genauigkeit bei der Berechnung der Höheninformation verbessert werden.

Das erfindungsgemäße System kann beispielsweise in ein Fahrzeug integriert werden. Optional und vorteilhafterweise kann das erfindungsgemäße System als Umgebungssensor einen Radar-, Lidar-, Ultraschallsensor und/oder eine Kamera umfassen. Weiterhin kann das System als Fahrzeugsensor einen Inertialsensor, vorzugsweise eine Inertialsensoreinheit mit Beschleunigungs- und Drehratensensoren, und/oder einen Positionssensor, vorzugsweise einen GPS-, Galileo-, oder GLONASS-Empfänger umfassen. Es versteht sich, dass der Umgebungssensor verschiedene Sensoren umfassen kann, sodass eine Datenfusion erfolgen kann.

Unter einem Objekt versteht sich hierin ein statisches oder dynamisches Objekt. Beispielsweise stellen Bäume, Häuser, andere Fahrzeuge, Fußgänger, Tiere, Brücken und Straßen Objekte dar. Eine Umgebung eines Fahrzeugs umfasst insbesondere einen von einem am Fahrzeug angebrachten Umgebungssensor aus sichtbaren Bereich im Umfeld des Fahrzeugs. Ein Umgebungssensor kann auch mehrere Sensoren umfassen, die beispielsweise eine 360°-Rundumsicht ermöglichen und somit ein vollständiges Umgebungsabbild aufzeichnen können. Üblicherweise wird während eines Messzyklus eines Umgebungssensors eine Vielzahl an Scanpunkten generiert. Unter einem Messzyklus wird ein einmaliges Durchlaufen des sichtbaren Bereichs verstanden. Die in einem Messzyklus erfassten Sensordaten können als Zielliste (Target List) bezeichnet werden. Unter einer Rasterdarstellung versteht sich eine Darstellung als Grid, bei der insbesondere verschiedene Scanpunkte anhand ihrer Detektionsposition zu Zellen des Grids zugeordnet werden. Ein dreidimensionales Raster bzw. eine dreidimensionale Rasterdarstellung entspricht insoweit einer dreidimensionalen Modellierung der Umgebung. Die dreidimensionale Rasterdarstellung ist hierin eine Darstellung in Bezug auf ein fahrzeugfestes Koordinatensystem. Die zweidimensionale Höhenrasterdarstellung entspricht einer zweidimensionalen Modellierung einer Umgebung eines Fahrzeugs, wobei jede Rasterzelle eine Information über eine Objekthöhe und/der eine freie Höhe umfasst für ein Objekt, das sich an der entsprechenden Position in der zweidimensionalen Darstellung befindet. Die zweidimensionale Höhenrasterdarstellung entspricht hierbei einem vorzugsweise ortsfesten Koordinatensystem (Weltkoordinatensystem) in Bezug zu einer Straßen- oder Erdoberfläche. Unter einem Detektieren einer Bezugsfläche wird eine Berechnung basierend auf unterschiedlichen Algorithmen verstanden. Ausgehend von den in der dreidimensionalen Rasterdarstellung erfassten Sensorpunkten der Umgebung des Fahrzeugs wird eine Erdoberfläche, insbesondere eine Straßenoberfläche berechnet bzw. geschätzt.

Die Erfindung wird nachfolgend anhand einiger ausgewählter Ausführungsbeispiele im Zusammenhang mit den beiliegenden Zeichnungen näher beschrieben und erläutert. Es zeigen:
Fig. 1 eine schematische Darstellung eines Fahrzeugs mit einem erfindungsgemäßen System in einer beispielhaften Umgebung;
Fig. 2 eine schematische Darstellung einer erfindungsgemäßen Vorrichtung zum Ermitteln von Höheninformationen;
Fig.3 eine schematische Darstellung der Umgebung des Fahrzeugs in einer Seitenansicht;
Fig. 4 eine schematische Darstellung der Modellierung der Umgebung des Fahrzeugs in einer Seitenansicht;
Fig. 5 eine schematische Darstellung der Erfassung einer freien Höhe;
Fig. 6 eine schematische Darstellung eines Fahrzeugs mit einem erfindungsgemäßen System und unterschiedlichen Sensoren; und
Fig. 7 eine schematische Darstellung eines erfindungsgemäßen Verfahrens.

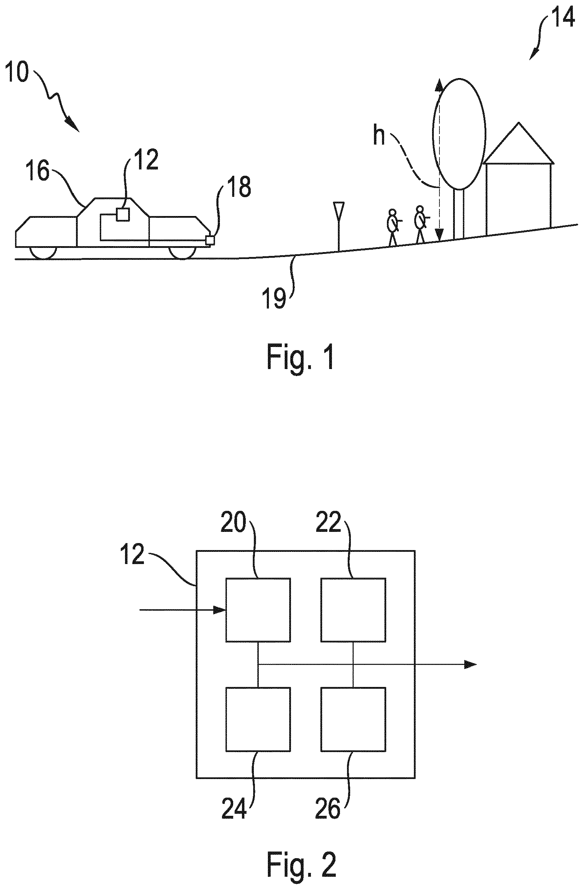

Die Fig. 1 zeigt eine schematische Darstellung eines erfindungsgemäßen Systems 10. Das System 10 umfasst eine Vorrichtung 12 zum Ermitteln von Höheninformationen eines Objekts 14 in einer Umgebung eines Fahrzeugs 16. Die Umgebung wird mittels eines Umgebungssensors 18 erfasst. Die Umgebung umfasst verschiedene Objekte (Bäume, Häuser, Verkehrsschilder, andere Verkehrsteilnehmer, Fußgänger, Radfahrer, Tiere, Straßen etc.). Diese verschiedenen Objekte können mittels des Umgebungssensors 18 erfasst werden. Beispielsweise reflektieren die Objekte Radarwellen eines Radarsensors oder sind über einen Lidarsensor erfassbar.

Das erfindungsgemäße System 10 erlaubt es, Höheninformationen der Objekte in der Umgebung des Fahrzeugs zu ermitteln. Die Erfassung der Objekte 14 erfolgt zunächst in einem fahrzeugfesten Koordinatensystem des Umgebungssensors. Um hierauf basierend Höheninformationen, beispielsweise eine Höhe h eines Objekts 14, zu ermitteln, ist es erforderlich zunächst eine Bezugsfläche 19 (entsprechend einer Erd- bzw. Straßenoberfläche), auf die sich die Höhe h bezieht, zu bestimmen. Um Höheninformationen ermitteln zu können, ist es erforderlich, eine Lage bzw. einen Verlauf der Bezugsfläche 19 zu kennen.

Im dargestellten Ausführungsbeispiel sind die Vorrichtung 12 sowie der Umgebungssensor 18 in das Fahrzeug 16 integriert. Es versteht sich, dass in anderen Ausführungsformen auch andere Anordnungen der Vorrichtung und des Umgebungssensors denkbar sind. Insbesondere kann die Vorrichtung 12 auch teilweise oder vollständig außerhalb des Fahrzeugs angeordnet sein, beispielsweise als Cloud-Service oder als Mobilgerät mit entsprechender App.

In der Fig. 2 ist eine erfindungsgemäße Vorrichtung 12 schematisch dargestellt. Die Vorrichtung 12 umfasst eine Eingangsschnittstelle 20, eine Rastereinheit 22, eine Auswerteeinheit 24 sowie eine Zuordnungseinheit 26. Die verschiedenen Einheiten können dabei insbesondere als Prozessor, Prozessormodul oder Software für einen Prozessor ausgebildet sein. Die erfindungsgemäße Vorrichtung kann teilweise oder vollständig in Soft- und/oder Hardware umgesetzt sein. Beispielsweise kann die Vorrichtung 12 in einem Fahrzeugsteuergerät integriert sein oder auch als separates Modul implementiert sein.

Über die Eingangsschnittstelle 20 werden Sensordaten eines Umgebungssensors sowie Sensordaten eines Fahrzeugsensors empfangen. Die Eingangsschnittstelle 20 kann beispielsweise als Steckverbindung in Hardware umgesetzt sein. Es ist aber auch möglich, dass die Eingangsschnittstelle 20 als entsprechende Softwareschnittstelle zum Datenempfang ausgebildet ist. Die Umgebungssensordaten umfassen Informationen über Objekte in der Umgebung des Fahrzeugs. Insbesondere werden Informationen über die Position verschiedener Objekte empfangen. Vorzugsweise werden Detektionen eines Radar- und/oder Lidarsensors empfangen und weiterverarbeitet. Die Detektionen derartiger Sensoren umfassen Informationen über eine räumliche Position eines detektierten Ziels bzw. einer Stelle, an der eine elektromagnetische Welle reflektiert wurde. Insbesondere werden einzelne Scanpunkte empfangen. In einem Messzyklus eines Umgebungssensors können beispielsweise einige hundert bis mehrere tausend Scanpunkte generiert werden. Üblicherweise werden mehrere Messzyklen pro Sekunde durchgeführt. Eine Messfrequenz kann beispielsweise bei 16 Hz bis 18 Hz liegen.

In der Rastereinheit 22 wird zunächst eine dreidimensionale Rasterdarstellung der Umgebung des Fahrzeugs in einem fahrzeugfesten Koordinatensystem erzeugt. Die einzelnen Scanpunkte des Umgebungssensors werden einem diskreten dreidimensionalen Raster (kann auch als Grid bezeichnet werden) zugeordnet. Insbesondere kann ein Raster mit einer konstanten Kantenlänge der einzelnen Zellen verwendet werden. In jeder Zelle erfolgt dann als Eintrag die Anzahl an Scanpunkten, die für diese Zelle bzw. für den Bereich dieser Zelle registriert wurden.

Das Fahrzeug bewegt sich während des Erfassens der Umgebungssensordaten weiter. Hierdurch ändert sich der Bezug der Umgebungssensordaten, da der Umgebungssensor fest mit dem Fahrzeug verbunden ist. Dasselbe Objekt wird an einer anderen Stelle registriert. Um eine Zuordnung von Sensordaten mehrerer Messzyklen an unterschiedlichen Positionen des Fahrzeugs bzw. des Fahrzeugsensors vornehmen zu können, muss die Bewegung des Fahrzeugs kompensiert werden. Hierzu werden die über die Eingangsschnittstelle 20 empfangenen Fahrzeugsensordaten verwendet. Insbesondere können Inertialsensordaten, also Beschleunigungen, Drehraten etc. verwendet werden. Es ist aber auch möglich, dass Daten eines Positionssensors verwendet werden.

Durch die Berücksichtigung von Umgebungssensordaten und Fahrzeugsensordaten kann die dreidimensionale Rasterdarstellung der Umgebung über längere Zeiträume erzeugt werden. Insbesondere kann der bisherige Inhalt der Rasterdarstellung über eine Abschätzung der Bewegung des Fahrzeugs in andere Rasterzellen übertragen werden.

In der Auswerteeinheit 24 wird ausgehend von der zuvor erzeugten dreidimensionalen Rasterdarstellung der Verlauf einer Bezugsfläche detektiert bzw. abgeschätzt. Verschiedene Standardansätze existieren, um basierend auf Daten unterschiedlicher Umgebungssensoren den Verlauf der Straßen- bzw. Erdoberfläche zu detektieren (Road Plane Schätzung). Hierzu ist es möglich, dass in der Auswerteeinheit 24 zusätzlich zu der dreidimensionalen Rasterdarstellung auch Sensordaten des Umgebungssensors und/oder des Fahrzeugsensors berücksichtigt werden, um eine höhere Genauigkeit zu erreichen. Die Bezugsfläche wird insoweit innerhalb der dreidimensionalen Rasterdarstellung detektiert.

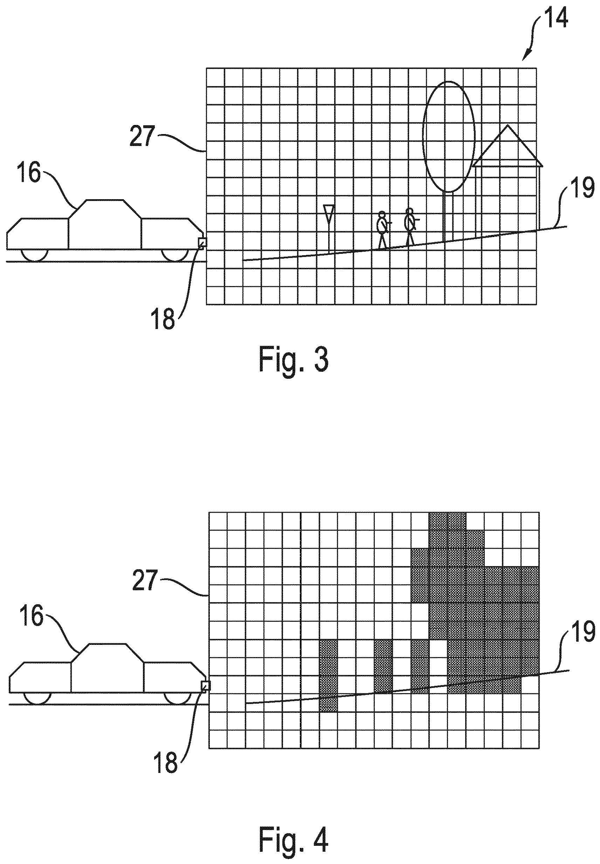

Die Funktionsweise der Zuordnungseinheit 26 ist in den Figs. 3 und 4 schematisch dargestellt. Beide Figuren zeigen eine schematische Seitenansicht der erfassten Umgebung sowie die entsprechenden Zellen der dreidimensionalen Rasterdarstellung 27. In der Darstellung ist die Ausdehnung der dreidimensionalen Rasterdarstellung in X-Richtung (Fahrtrichtung des Fahrzeugs) sowie in Z-Richtung (Höhe) dargestellt. Es versteht sich, dass die Rasterdarstellung auch eine Ausdehnung in Y-Richtung (nicht dargestellt, entspricht einer Richtung senkrecht zur Darstellungsebene in den Figs. 3 und 4) aufweist. Die dreidimensionale Rasterdarstellung 27 hat dabei üblicherweise eine fixe und jeweils gleiche Auflösung in X-, Y- und Z-Richtungen. Die dreidimensionale Rasterdarstellung 27 entspricht einer diskreten Darstellung der Umgebung. Basierend auf einer Schätzung der Bewegung des Fahrzeugs werden die neu hinzukommenden Daten des Umgebungssensors immer in die richtige Zelle eingetragen.

Das Fahrzeug 16 registriert mittels des Umgebungssensors 18 die Objekte 14 in der Umgebung. Zunächst wird die Bezugsfläche 19 ermittelt. Vorzugsweise wird eine Ebene im dreidimensionalen Raum als Modellierung für die Bezugsfläche 19 verwendet (beispielsweise beschrieben durch Aufpunkt und Normalenvektor). Basierend auf der Bezugsfläche sowie auf der dreidimensionalen Rasterdarstellung kann dann eine Höhe von Objekten über der Bezugsfläche 19 bestimmt werden.

In der Zuordnungseinheit 26 wird eine zweidimensionale Höhenrasterdarstellung der Umgebung des Fahrzeugs erzeugt, bei der jede Zelle eines zweidimensionalen Grids eine der entsprechenden Position zugeordnete Höheninformation umfasst. Diese Höheninformation (Objekthöhe oder freie Höhe) entspricht der Höhe eines Objekts in Bezug zur Bezugsfläche 19. Die X- und Y-Achsen der zweidimensionalen Rasterdarstellung entsprechen insoweit vorzugsweise den X- und Y-Achsen der dreidimensionalen Rasterdarstellung.

Die Informationen über die Höhe der einzelnen Objekte werden zu einem Wert zusammengefasst. Hierdurch kann die Dimensionalität der dreidimensionalen Rasterdarstellung reduziert werden. Durch die Verwendung der zweidimensionalen Rasterdarstellung wird eine wesentliche Verbesserung in der Berechenbarkeit erreicht. Dies erlaubt eine höhere Aktualisierungsrate, so dass quasi in Echtzeit die Höhen von Objekten in der Umgebung des Fahrzeugs 16 erfasst werden können. Die Schätzung der Bezugsfläche 19 verbessert sich aufgrund der Sensorgenauigkeit, wenn sich das Fahrzeug dem betreffenden Bereich nähert. Erfindungsgemäß wird diese verbesserte Berechnung iterativ dazu genutzt, die Schätzung von Objekthöhen bzw. die Schätzung einer Unter- und/oder Überfahrbarkeit zu verbessern. Durch die Verwendung der zweidimensionalen Rasterdarstellung kann die verbesserte Schätzung erreicht werden, ohne dass die dreidimensionale Rasterdarstellung neu berechnet werden müsste. Rechenzeit wird gespart. Insbesondere wird durch die Aktualisierung der Berechnung der zweidimensionalen Rasterdarstellung die Zykluszeit des Umgebungssensors und des Fahrzeugsensors nicht überschritten, sodass in jedem Zeitschritt neue Sensordaten verwendet werden können.

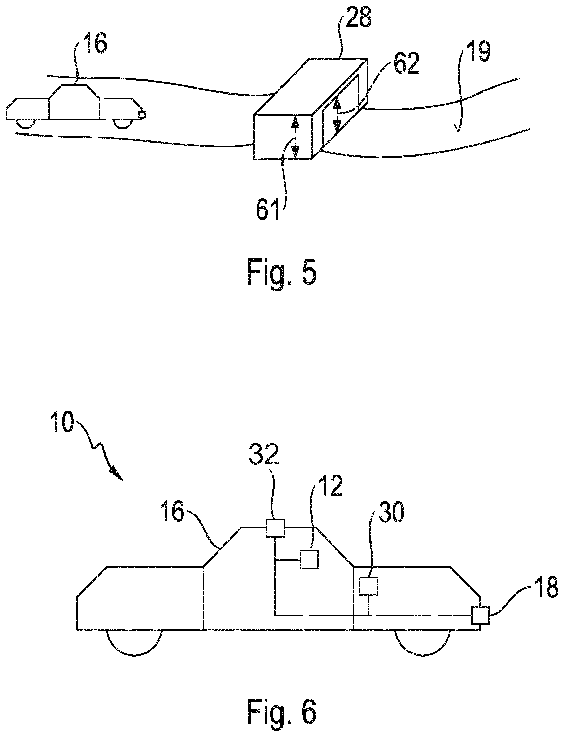

Zusätzlich oder alternativ zu der Berechnung und Schätzung von Objekthöhen im Umfeld des Fahrzeugs können auch freie Höhen als Höheninformation berechnet werden. In der Fig. 5 ist dargestellt, dass sich ein Fahrzeug 16 einer Brücke 28 nähert. Wie zuvor dargestellt wird zunächst für die Stützen der Brücke eine Objekthöhe b1 ermittelt und in der entsprechenden Rasterzelle der zweidimensionalen Höhenrasterdarstellung vermerkt. Es ist nun möglich, dass zusätzlich oder alternativ zur Ermittlung der Objekthöhe einzelner Objekte eine freie Höhe b2 ermittelt und in einer zweiten Ebene der zweidimensionalen Rasterdarstellung vermerkt wird. Im dargestellten Beispiel ist unter der Brücke eine freie Höhe b2, die einer Durchfahrtshöhe entspricht. Diese freie Höhe b2 bezieht sich dabei ebenfalls auf die Bezugsfläche 19 und entspricht insoweit einer Höheninformation einer Unterfahrt, die analog zur Objekthöhe b1 berechnet wird. Erfindungsgemäß kann eine Objekthöhe und/oder eine freie Höhe in der zweidimensionalen Rasterdarstellung vermerkt werden. Es ist möglich, dass zwei Werte (Objekthöhe und freie Höhe) pro zweidimensionaler Position, also pro Rasterzelle, berechnet werden.

Basierend auf den Informationen zur freien Höhe wird einem autonomen oder teilautonomen Fahrzeug eine Entscheidung ermöglicht, ob eine Brücke oder ein tiefhängender Ast eines Baumes unterfahren werden kann.

Sowohl die Genauigkeit der Objekthöhenermittlung als auch die Genauigkeit der Ermittlung der freien Höhe entspricht im Idealfall der Hälfte der Zellengröße. Allerdings kann sich aus Ungenauigkeiten bei der Schätzung der Bewegung des eigenen Fahrzeugs eine Fehlerfortpflanzung ergeben, durch die größere Fehler entstehen.

Bei der Schätzung der Bezugsfläche 19 können zusätzliche Informationen verwendet werden. Beispielsweise kann aus einer Betrachtung einer Trajektorie und einer Schätzung einer Bewegung dynamischer Objekte ein Verlauf der Bezugsfläche geschätzt werden. Das zugrundeliegende Modellwissen stellt insoweit die Information dar, dass sich dynamische Objekte üblicherweise auf der Erdoberfläche bewegen. Weiterhin ist es möglich, dass Karteninformationen verwendet werden. Ebenfalls ist es möglich, dass Informationen aus einem Cloudsystem (beispielsweise einem internetbasierten Dienst) verwendet werden. Insbesondere können Informationen, die auf Sensordaten anderer Verkehrsteilnehmer, beispielsweise anderer Fahrzeuge, basieren, verwendet werden. Der Austausch kann über ein entsprechendes Kommunikationssystem und einen entsprechenden Cloudserver erfolgen. Zudem ist es möglich, dass eine Lokalisierung des eigenen Fahrzeugs, beispielsweise durch ein simultanes Lokalisierungs- und Kartographierungsverfahren für die Verbesserung der Schätzung der Bezugsfläche eingesetzt wird.

In der Fig. 6 ist schematisch ein Fahrzeug 16 dargestellt, in das ein erfindungsgemäßes System 10 integriert ist. Das erfindungsgemäße System 10 umfasst einen Umgebungssensor 18, eine Vorrichtung 12, einen Fahrzeugsensor mit einem Intertialsensor 30 und einem Positionssensor 32. Der Fahrzeugsensor kann auch nur einen der beiden Sensoren umfassen. Der Positionssensor kann beispielsweise einem GPS-, Galileo- oder GLONASS-Sensor entsprechen. Die Vorrichtung 12 kann beispielsweise in ein Fahrzeugsteuergerät integriert sein. Insbesondere ist es möglich, dass in der Vorrichtung 12 die Daten von ohnehin am Fahrzeug vorhandenen Sensoren verarbeitet werden.

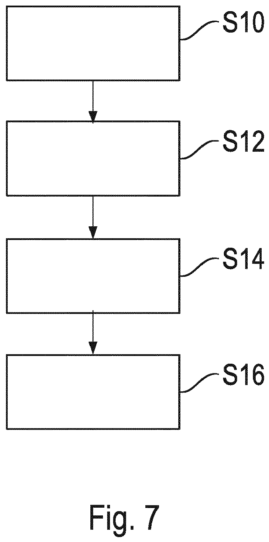

In der Fig. 7 ist schematisch ein erfindungsgemäßes Verfahren zum Ermitteln von Höheninformationen eines Objektes in einer Umgebung eines Fahrzeugs illustriert. Das Verfahren umfasst Schritte des Empfangens S10 von Umgebungssensordaten, des Erzeugens S12 einer dreidimensionalen Rasterdarstellung, des Detektierens S14 einer Bezugsfläche sowie des Berechnens S16 einer zweidimensionalen Höhenrasterdarstellung. Das erfindungsgemäße Verfahren kann beispielsweise als Smartphone App oder als Software für ein Fahrzeugsteuergerät ausgeführt sein. Der zunächst ausgeführte Schritt des Erzeugens S10 wird dabei in einem absoluten Fahrzeugkoordinatensystem ausgeführt, wobei die erzeugte dreidimensionale Rasterdarstellung gegenüber diesem absoluten Fahrzeugkoordinatensystem stabil ist. Die weiteren Schritte des Detektierens S14 und des Berechnens S16 werden in einem Weltkoordinatensystem ausgeführt, das gegenüber der kompletten Reichweite der üblicherweise in einem Fahrzeug verwendeten Sensoren nicht stabil ist. Insbesondere wird die Erd- bzw. Straßenoberfläche als Bezugspunkt verwendet.

Erfindungsgemäß wird ermöglicht, dass basierend auf der ermittelten zweidimensionalen Höhenrasterdarstellung sowie basierend auf einem Vorwissen bezüglich einer Höhe des eigenen Fahrzeugs jeweils entschieden werden kann, ob ein Bereich, der von einer Rasterzelle der zweidimensionalen Höhenrasterdarstellung abgebildet wird, über- bzw. unterfahren werden kann. Insbesondere können Rasterzellen bzw. deren zugeordnete Umgebungsbereiche überfahren werden, wenn die Objekthöhe Null ist. Bezüglich der freien Höhe können Bereiche unterfahren werden, deren freie Höhe größer als eine Höhe des eigenen Fahrzeugs ist.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Ein Element, eine Einheit, eine Schnittstelle, eine Vorrichtung und ein System können teilweise oder vollständig in Hard- und/oder in Software umgesetzt sein. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Ein Computerprogramm kann auf einem nichtflüchtigen Datenträger gespeichert/vertrieben werden, beispielsweise auf einem optischen Speicher oder auf einem Halbleiterlaufwerk (SSD). Ein Computerprogramm kann zusammen mit Hardware und/oder als Teil einer Hardware vertrieben werden, beispielsweise mittels des Internets oder mittels drahtgebundener oder drahtloser Kommunikationssysteme. Bezugszeichen in den Patentansprüchen sind nicht einschränkend zu verstehen.

### Bezugszeichen

- 10: System
- 12: Vorrichtung
- 14: Objekt
- 16: Fahrzeug
- 18: Umgebungssensor
- 19: Bezugsfläche
- 20: Eingangsschnittstelle
- 22: Rastereinheit
- 24: Auswerteeinheit
- 26: Zuordnungseinheit
- 27: dreidimensionale Rasterdarstellung
- 28: Brücke
- 30: Intertialsensor
- 32: Positionssensor

## Patentansprüche

1. Vorrichtung (12) zum Ermitteln von Höheninformationen eines Objekts (14) in einer Umgebung eines Fahrzeugs (16), mit:
einer Eingangsschnittstelle (20) zum Empfangen von Umgebungssensordaten eines Umgebungssensors (18) mit Informationen über Objekte in der Umgebung des Fahrzeugs sowie von Fahrzeugsensordaten eines Fahrzeugsensors (30, 32) mit Informationen über eine Bewegung des Fahrzeugs in Bezug zu der Umgebung;
einer Rastereinheit (22) zum Erzeugen einer dreidimensionalen Rasterdarstellung (27) der Umgebung des Fahrzeugs basierend auf den Umgebungssensordaten und den Fahrzeugsensordaten;
einer Auswerteeinheit (24) zum Detektieren einer Bezugsfläche (19) in der dreidimensionalen Rasterdarstellung; und
einer Zuordnungseinheit (26) zum Berechnen einer zweidimensionalen Höhenrasterdarstellung der Umgebung des Fahrzeugs basierend auf der dreidimensionalen Rasterdarstellung und der Bezugsfläche, wobei eine Rasterzelle der zweidimensionalen Höhenrasterdarstellung eine Höheninformation des Objekts bezüglich der Bezugsfläche umfasst.

2. Vorrichtung (12) nach Anspruch 1, wobei die Auswerteeinheit (24) zum Detektieren einer Straßenebene als Bezugsfläche (19) ausgebildet ist.

3. Vorrichtung (12) nach einem der vorstehenden Ansprüche, wobei
die Zuordnungseinheit (26) zum Berechnen der zweidimensionalen Höhenrasterdarstellung mit zwei Ebenen ausgebildet ist; und
eine Rasterzelle einer ersten Ebene eine freie Höhe (b2) bezüglich der Bezugsfläche umfasst und eine Rasterzelle einer zweiten Ebene eine Objekthöhe (b1) bezüglich der Bezugsfläche umfasst.

4. Vorrichtung (12) nach einem der vorstehenden Ansprüche, wobei die Rastereinheit (22)
zum Schätzen einer Bewegung des Fahrzeugs (16) basierend auf den Fahrzeugsensordaten und den Umgebungssensordaten ausgebildet ist; und
zum Zuordnen der Umgebungssensordaten zu Rasterzellen der dreidimensionalen Rasterdarstellung (27) basierend auf einer Kompensation der geschätzten Bewegung ausgebildet ist.

5. Vorrichtung (12) nach einem der vorstehenden Ansprüche, wobei
die Eingangsschnittstelle (20) zum Empfangen von Radardaten eines Radarsensors und/oder von Lidardaten eines Lidarsensors ausgebildet ist; und
die Rastereinheit (22) zum Erzeugen der dreidimensionalen Rasterdarstellung (27) basierend auf den Radardaten und/oder den Lidardaten ausgebildet ist.

6. Vorrichtung (12) nach einem der vorstehenden Ansprüche, wobei eine Berechnungsfrequenz der Auswerteeinheit (24) und/oder der Zuordnungseinheit (26) größer als eine Berechnungsfrequenz der Rastereinheit (22) ist.

7. Vorrichtung (12) nach einem der vorstehenden Ansprüche, wobei
die Rastereinheit (22) zum Schätzen einer Trajektorie eines dynamischen Objektes in der dreidimensionalen Rasterdarstellung (27) ausgebildet ist; und
die Auswerteeinheit (24) zum Detektieren der Bezugsfläche (19) basierend auf der geschätzten Trajektorie ausgebildet ist.

8. Vorrichtung (12) nach einem der vorstehenden Ansprüche, wobei die Auswerteeinheit (24) zum Detektieren der Bezugsfläche (19) basierend auf den Umgebungssensordaten ausgebildet ist.

9. Vorrichtung (12) nach einem der vorstehenden Ansprüche, wobei
die Eingangsschnittstelle (20) zum Empfangen einer Karteninformation der Umgebung ausgebildet ist; und
die Auswerteeinheit (24) zum Detektieren der Bezugsfläche (19) basierend auf der Karteninformation ausgebildet ist.

10. Vorrichtung (12) nach einem der vorstehenden Ansprüche, wobei
die Eingangsschnittstelle (20) zum Empfangen eines zweidimensionalen Referenzrasters, das basierend auf Umgebungssensordaten anderer Fahrzeuge erzeugt wurde, ausgebildet ist; und
die Auswerteeinheit (24) zum Detektieren der Bezugsfläche (19) basierend auf dem Referenzraster ausgebildet ist.

11. Vorrichtung (12) nach einem der vorstehenden Ansprüche, wobei die Auswerteeinheit (24) zum Berechnen einer eigenen Position innerhalb der dreidimensionalen Rasterdarstellung (27) und zum Detektieren der Bezugsfläche basierend auf der eigenen Position ausgebildet ist.

12. System (10) zum Ermitteln von Höheninformationen eines Objekts (14) im Umfeld eines Fahrzeugs (16), mit:
einer Vorrichtung (12) nach einem der Ansprüche 1 bis 11;
einem Umgebungssensor (18) zum Detektieren von Objekten in einer Umgebung des Fahrzeugs; und
einem Fahrzeugsensor zum Detektieren einer Bewegung des Fahrzeugs in Bezug zu seiner Umgebung.

13. System (10) nach Anspruch 12, wobei
der Umgebungssensor (18) einen Radar-, Lidar-, Ultraschallsensor und/oder eine Kamera umfasst; und
der Fahrzeugsensor einen Intertialsensor 30, vorzugsweise eine Inertialsensoreinheit, und/oder einen Positionssensor 32, vorzugsweise einen GPS-, GALILEO- oder GLONASS-Empfänger umfasst.

14. Verfahren zum Ermitteln von Höheninformationen eines Objekts (14) in einer Umgebung eines Fahrzeugs (16), mit den Schritten:
Empfangen (S10) von Umgebungssensordaten eines Umgebungssensors (18) mit Informationen über Objekte in der Umgebung des Fahrzeugs sowie von Fahrzeugsensordaten eines Fahrzeugsensors mit Informationen über eine Bewegung des Fahrzeugs in Bezug zu der Umgebung;
Erzeugen (S12) einer dreidimensionalen Rasterdarstellung (27) der Umgebung des Fahrzeugs basierend auf den Umgebungssensordaten und den Fahrzeugsensordaten;
Detektieren (S14) einer Bezugsfläche (19) in der dreidimensionalen Rasterdarstellung; und
Berechnen (S16) einer zweidimensionalen Höhenrasterdarstellung der Umgebung des Fahrzeugs basierend auf der dreidimensionalen Rasterdarstellung und der Bezugsfläche, wobei eine Rasterzelle der zweidimensionalen Höhenrasterdarstellung eine Höheninformation des Objekts bezüglich der Bezugsfläche umfasst.

15. Computerprogrammprodukt mit Programmcode zum Durchführen der Schritte des Verfahrens nach Anspruch 14, wenn der Programmcode auf einem Computer ausgeführt wird.
